# EUROPEAN PATENT APPLICATION

(11) **EP 3 278 912 A1**
(43) Date of publication of application: **07.02.2018**
(21) Application number: 16772483.0
(22) Date of filing: 23.03.2016
(51) Int. Cl.: B23C 5/10

(54) **ROUGHING END MILL**

(30) Priority: 31.03.2015 JP 2015071436
(71) Applicant: Mitsubishi Materials Corporation, Chiyoda-ku Tokyo 100-8117 (JP)
(72) Inventor: HOSOKAWA, Masayasu, Akashi-shi Hyogo 674-0071 (JP); AZEGAMI, Takayuki, Akashi-shi Hyogo 674-0071 (JP); SAKAGUCHI, Koutarou, Akashi-shi Hyogo 674-0071 (JP)
(74) Representative: Hoffmann Eitle
(86) International application number: PCT/JP2016/059129
(87) International publication number: WO 2016/158602

(57) **Abstract**

A roughing end mill includes: an end mill main body (1) configured to be rotated about an axis; and four or more of outer peripheral cutting edges (6) provided on an outer circumference of a tip part of the end mill main body (1) spaced apart in a circumferential direction, each of the outer peripheral cutting edges (6) extending from a tip of the end mill main body to a rear side, wherein each of outer peripheral cutting edges (6) includes a waveform cutting edge (9) that is concaved and convexed in a radial direction, a phase is shifted within one pitch, and the waveform cutting edges (9) of the outer peripheral cutting edges (6) have one or more parts, in which phases of the waveform cutting edges (9) are sequentially shifted multiple times toward a rear end side of the end mill main body (1), and shifted the same multiple times toward a tip end side of the end mill main body (1), while a reference outer peripheral cutting edge (6A) goes around once on a side opposite to the end mill rotation direction (T) and returns to a position of the reference outer peripheral cutting edge (6A).

## Description

### Technical Field

The present invention relates to a roughing end mill drill, in which outer peripheral cutting edges are provided on the outer circumference of the tip part of the end mill main body rotated about the axis. The outer peripheral cutting edge has a waveform cutting edge that is concaved and convexed in the radial direction of the end mill main body viewed from the end mill rotation direction.

Priority is claimed on Japanese Patent Application No. 2015-071436, filed March 31, 2015, the content of which is incorporated herein by reference.

### Background Art

As an example of a roughing end mill, one in Patent Literature 1 (PTL 1) is disclosed. In the roughing end mill in PTL 1, multiple grooves having a predetermined twist angle are formed on the outer circumference of the main body, and edge parts (outer peripheral cutting edges), which have cutting edges in a waveform (waveform edge) along the grooves, are provided. In such a roughing end mill, fragmented chips are formed by the surrounding of the peak of the waveform cutting edge, which are convexed to the outer circumference side of the end mill main body, by positioning the phases of the waveform cutting edges in a shifted manner toward the rear or tip end side of the end mill main body between the outer peripheral cutting edges adjacent in the radial direction of the end mill main body. Accordingly, the cutting resistance is reduced in roughing of a workpiece.

### Citation List

### Patent Literature

Patent Literature 1: Japanese Unexamined Patent Application, First Publication No. S63-034010 (A)

### Summary of Invention

### Technical Problem

The phase shift of the waveform cutting edges in such a roughing end mill is configured in such a way that the phase of the waveform cutting edge sequentially shifts to the rear (or tip) end side of the end mill main body within one pitch of the waveform cutting edge from the reference outer circumference cutting edge toward the side opposite to the end mill rotation direction, thereby to return to the original reference outer circumference cutting edge, as described in the above-mentioned PTL 1.

However, in such a roughing end mill, the impact when the surrounding of the peak of the waveform cutting edge of each of the outer peripheral cutting edges is cut into the workpiece is loaded periodically in one direction to the rear or tip end side of the end mill main body in the order. Therefore, resonance is likely to occur in the end mill main body due to vibration caused by such an impact, so-called chatter vibration is induced. Accordingly, there is a possibility that machined surface accuracy is significantly deteriorated even as for roughing; machining efficiency is reduced; and breaking of the end mill main body occurs occasionally.

Moreover, in the normal roughing end mill, the phase of the waveform cutting edge shifts at an equal interval from the reference outer peripheral cutting edge toward the rear or tip end side of the end mill main body. Thus, the shape and dimension of the cross section of the chip formed by each of the waveform cutting edges in roughing are the same. In other words, the chatter vibration due to resonance of the end mill main body are more likely to occur since the impacts when the waveform cutting edges are cut into the workpiece are the same. In the roughing end mill described in PTL 1, the cutting load to the waveform cutting edges is reduced by adjusting the shift amount of the phase of the waveform cutting edges for the machining efficiency to be improved. However, there is no difference in the sense that the shapes of the cross sections of the chips formed are the same.

The present invention has been made under such circumstances. The purpose of the present invention is to provide a roughing end mill capable of preventing the chatter vibration from occurring in the above-described roughing end mill provided with the outer peripheral cutting edges including the waveform cutting edges.

### Solution to Problem

In order to solve the above-mentioned problem, the present invention has aspects below. A roughing end mill including:
an end mill main body configured to be rotated about an axis; and
four or more of outer peripheral cutting edges provided on an outer circumference of a tip part of the end mill main body spaced apart in a circumferential direction with an interval, each of the outer peripheral cutting edges extending from a tip of the end mill main body to a rear side thereof, wherein
each of outer peripheral cutting edges comprises a waveform cutting edge that is concaved and convexed in a radial direction of the end mill main body as viewed from an end mill rotation direction, and
a phase of the waveform cutting edge is shifted within one pitch of the waveform cutting edge between waveform cutting edges of outer peripheral cutting edges adjacent in the circumference direction, and wherein
the waveform cutting edges of the outer peripheral cutting edges have one or more parts, in which phases of the waveform cutting edges are sequentially shifted multiple times toward a rear end side of the end mill main body, and then shifted the same multiple times toward a tip end side of the end mill main body, while a reference outer peripheral cutting edge goes around once on a side opposite to the end mill rotation direction and returns to a position of the reference outer peripheral cutting edge.

In the roughing end mill configured as described above, for example, in the case where the number of the outer peripheral cutting edges is the minimum number, four, the phase of the reference outer peripheral cutting edge returns to the original phase of the reference outer peripheral cutting edge by: being sequentially shifted twice from the reference outer peripheral cutting edge toward the rear end side of the end mill main body in the direction opposite to the end mill rotation direction in two outer peripheral cutting edges; then, the phases of the subsequent outer peripheral cutting edges being shifted once toward the tip end side of the end mill main body; and then, the phases of the further subsequent outer peripheral cutting edges being further shifted once to the tip end side of the end mill man body when the outer peripheral cutting edge goes around to return to the original reference outer peripheral cutting edge.

Therefore, in the roughing end mill, the impacts when the waveform cutting edges cut into the workpiece are loaded on the same times of 2 toward the rear end side and the tip end side of the end mill main body when the end mill main body makes one round between the reference outer peripheral cutting edges. Thus, vibrations formed due to these impacts can be cancelled each other; and occurrence of the chatter vibration because of the end mill main body resonating by these impacts can be prevented. Accordingly, the machined surface accuracy and machining efficiency can be improved, and damages of the end mill main body can be prevented.

In the roughing end mill having the above-described configuration, by providing the waveform cutting edges in which the phases are shifted to the rear end side of the end mill main body toward the side opposite to the end mill rotation direction in multiple times and the waveform cutting edges in which the phases are shifted to the tip end side of the end mill main body in multiple times toward the side opposite to the end mill rotation direction, it is possible for the shape and the area of the cross sections of the chips formed by the waveform cutting edges to be different each other. Therefore, the impacts when these waveform cutting edges cut into the workpiece become different each other. Accordingly, the vibration due to these impacts becomes even harder to resonate; and the occurrence of the chatter vibration can be prevented even more reliably.

In such a roughing end mill, normally, the end cutting edge extending from the tip of the outer peripheral cutting edge to the inner peripheral side is formed at the end of the end mill main body. In the case where it is the square-type radius end mill, in which the end cutting edge extends along the plane perpendicular to the axis of the end mill main body, if the waveform cutting edge is directly extended to the tip end of the outer peripheral cutting edge to be crossed with the end cutting edge, depending on the phase of the waveform cutting edge, the waveform cutting edge crosses with the end cutting edge at the part that is concaved to the inner peripheral side toward the rear end side of the end mill main body. Thus, the cross angle becomes an acute angle for fracture to occur easily.

Thus, under such an occasion, it is preferable that a tip cutting edge, which connects to a peak of the waveform cutting edge disposed in a most distal end of the end mill main body, is provided on a tip end part of each of the outer peripheral cutting edges, a rotation locus about the axis of tip cutting edges being positioned on an identical cylindrical surface centered on the axis in order to secure strength by having the cross angle be a substantially right angle by crossing the tip cutting edge with the end cutting edge.

However, in such a case, if the phase of the waveform cutting edge is sequentially shifted to the rear end side of the end mill main body as in the above-described normal roughing end mill toward the side opposite to the end mill rotation direction, the removal allowance of the outer peripheral cutting edge, which has the tip cutting edge with the longest cutting edge since the peak of the convex part of the waveform cutting edge disposed in the most distal end of the end mill main body is located to the rear end side of the end mill main body, becomes large. In a contrasting situation, where the phase of the waveform cutting edge is sequentially shifted to the tip end side of the end mill main body toward the side opposite to the end mill rotation direction, similarly, the removal allowance becomes large, since the outer peripheral cutting edge, which has the tip cutting edge with the longest cutting edge, needs to cut uncut portions left by the tip cutting edge and the waveform cutting edge with short length of the cutting edges together. Moreover, the cutting load on the tip end part of the end mill main body changes rapidly since the removal allowance of the tip cutting edges changes greatly by continuously performing cutting with the tip cutting edges with the longest and the shortest cutting edge lengths. It is possible that such a rapid change of the cutting load at the tip end part causes the chatter vibration.

Contrary to the above-described normal roughing end mill, in the roughing end mill, which is an aspect of the present invention, (hereinafter referred as "the roughing end mill of the present invention"), even in the case where the tip cutting edge is provided on the tip end part of the outer peripheral cutting edge, the cutting edge length of the tip cutting edge is sequentially lengthened in multiple times in the outer peripheral cutting edge from the reference outer peripheral cutting edge toward the side opposite to the end mill rotation direction; and sequentially shortened in the same times to return to the level in the reference outer peripheral cutting edge. Therefore, the removal allowance of the outer peripheral cutting edge having the tip cutting edge with the longest cutting edge does not become too large. Accordingly, the occurrence of fracture can be prevented. In addition, the rapid change of the cutting load at the tip end part of the end mill main body because of the removal allowance being changed greatly, can be prevented. Accordingly, the occurrence of the chatter vibration can be prevented more reliably.

### Advantageous Effects of Invention

As described above, according to the present invention, by varying the direction and the extent of the impacts on each of outer peripheral cutting edges when the waveform cutting edges are cut into the workpiece, the chatter vibration can be prevented by cancelling vibration due to these impacts each other; the machining accuracy and the machining efficiency can be improved; and the service life of the end mill can be lengthened.

### Brief Description of Drawings

FIG. 1 is a perspective view showing one embodiment of the present invention.
FIG. 2 is a side view of the embodiment shown in FIG. 1.
FIG. 3 is an enlarged front view of the embodiment shown in FIG. 1 as viewed from the tip end side of the axis.
FIG. 4 is a developed view of the outer peripheral cutting edge in the embodiment shown in FIG. 1.
FIG 5 is a view showing a chip formed by the waveform cutting edges in the embodiment shown in FIG. 1.
FIG. 6 is a developed view of the outer peripheral cutting edges in a conventional roughing end mill.
FIG. 7 is a view showing a chip formed by the waveform cutting edges in the roughing end mill shown in FIG. 6.
FIG.. 8 (a) is a view showing chips formed by the peripheral cutting edges around the tip cutting edge of the roughing end mill shown in FIG. 8.
FIG 8 (b) is a view showing chips formed by the peripheral cutting edges around the tip cutting edge in the embodiment shown in FIG. 1.

### Description of Embodiments

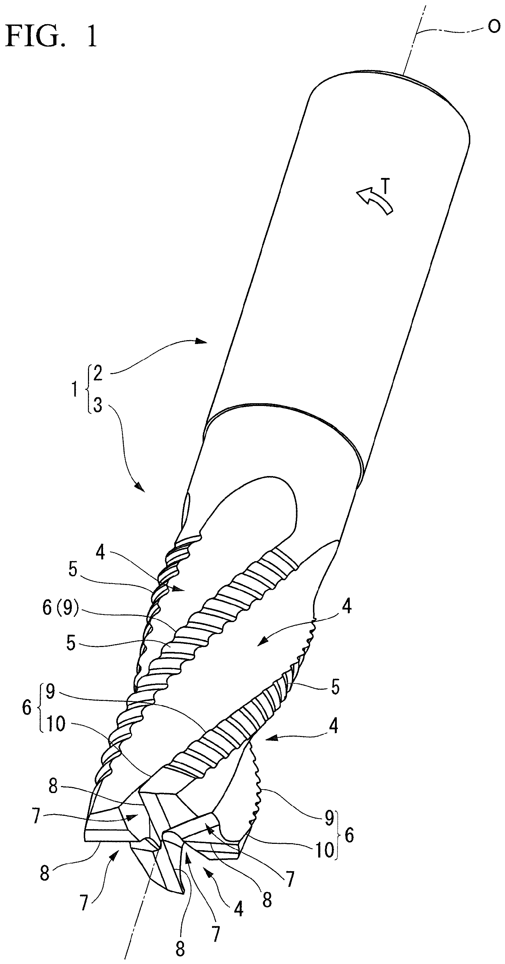

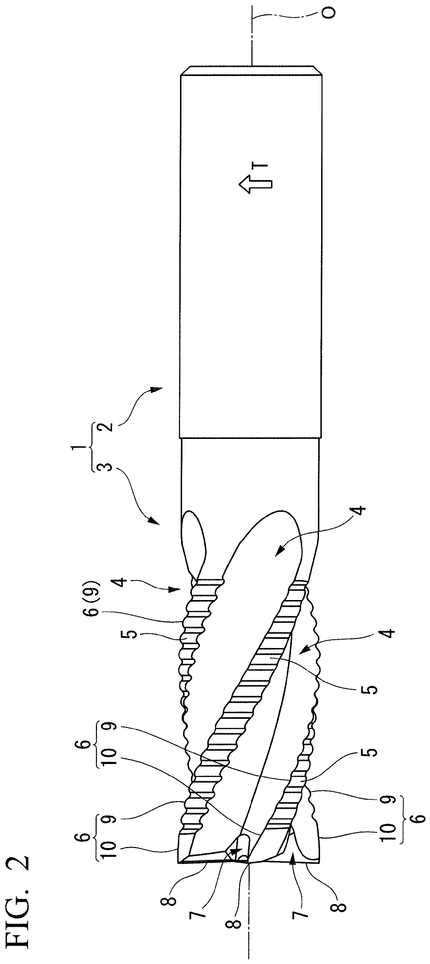

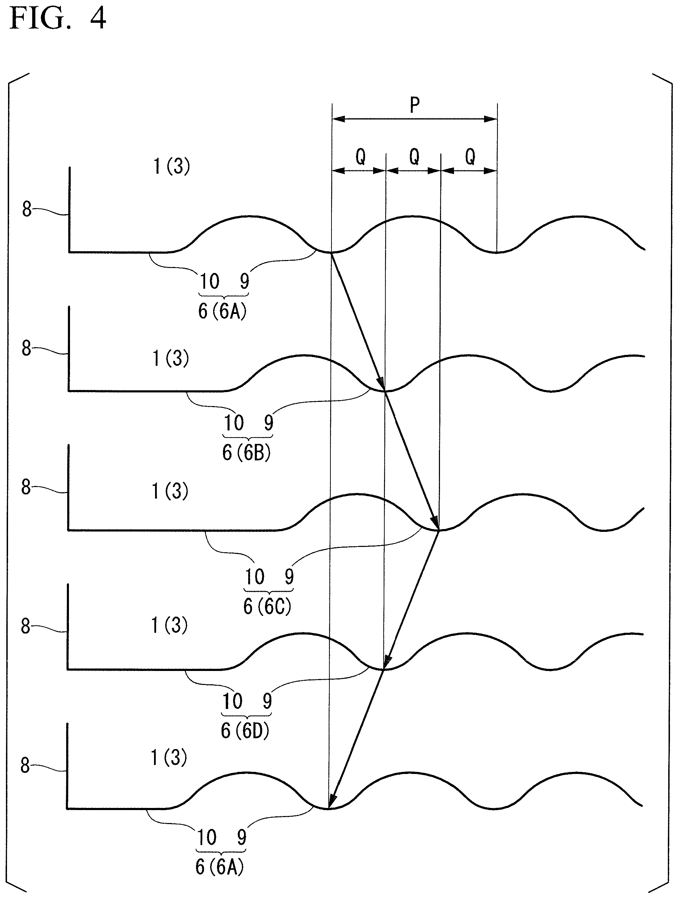

FIGS. 1 to 4 show one embodiment of the present invention. In the present embodiment, the end mill main body 1 is formed in a substantially cylindrical shape having an outer shape centered on the axis O by a hard material such as a cemented carbide or the like, and the end mill main body 1 is provided at the rear end side (upper right side in FIG. 1, right side in FIGS. 2 and 4). The read end part of the end mill main body 1 is the shank portion 2 that remains in a columnar shape, and the part on the tip end side (the lower left side in FIG. 1, the left side in FIGS. 2 and 4) is the cutting edge portion 3. In such a roughing end mill, while the shank portion 2 is gripped by the main shaft of the machine tool and is rotated in the end mill rotation direction T about the axis O, it is normally slid forward in the direction perpendicular to the axis O to cut the work material to perform cutting.

The chip discharge flutes 4 extending from the tip end to the rear end side of the end mill main body 1 is formed on the outer circumference of the cutting blade portion 3. The outer peripheral cutting edges 6 are formed on the outer side ridges of walls of the chip discharge flutes 4 facing the direction of the end mill rotation direction T. The walls of the chip discharging flutes 4 facing the direction of the end mill rotation direction T are the rake faces of the outer peripheral cutting edges 6. The outer circumference surface of the cutting edge part 3 crossing the above-described rake face is the outer peripheral flank faces 5 of the outer peripheral cutting edges 6. In the present embodiment, four cutting chip discharge flutes 4 are formed on the cutting edge part 3 spaced apart in the circumferential direction with an interval. Thus, in terms of the outer peripheral cutting edges 6,4 of them are formed spaced apart in the circumferential direction with an interval, similarly.

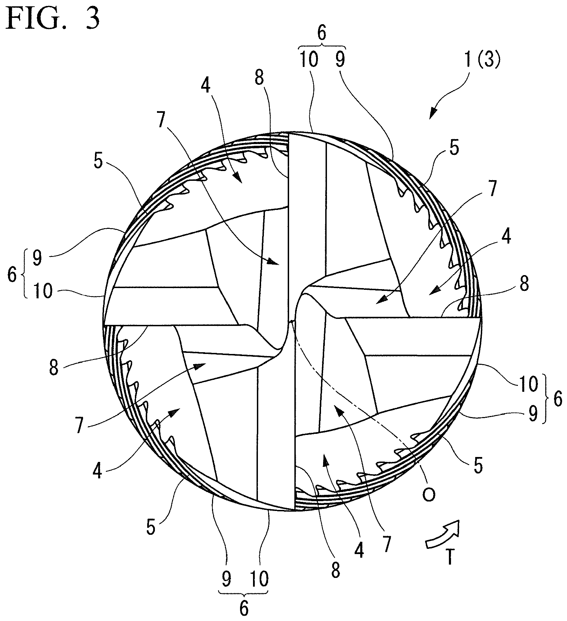

As shown in FIG. 3, the gashes 7 having a substantially V-shaped concave groove shape are formed at the tip portion of each of the chip discharge flutes 4, and the end cutting edges 8 are formed on the tip end edges of the wall surfaces of these gashes 7 facing the end mill rotation direction T in such a way that the end cutting edge 8 extends from the tip end of each outer peripheral cutting edge 6 to the inner peripheral side. The wall surfaces of the gashes 7 are the rake faces of the end cutting edges 8. In the roughing end mill of the present embodiment, the end cutting edge 8 extends substantially along the plane orthogonal to the axis O to be the square-type solid roughing end mill, in which the end cutting edge 8 crosses with the after-mentioned tip cutting edge, which is formed in the tip end part of the outer peripheral cutting edge 6, in a substantially right angle.

Each chip discharge flute 4 is formed so as to twist to the rear side in the end mill rotation direction T about the axis O from the tip end of the end mill main body 1 toward the rear end side. Thus, each of the outer peripheral cutting edges 6 is formed in a spiral shape that twists toward the rear side in the end mill rotation direction T about the axis O from the tip end of the end mill main body 1 to the rear end side in a similar manner. In the present embodiment, the twist angles of the spirals formed by the four outer peripheral cutting edges 6 are formed to be equal to each other, and the circumferential intervals of the four outer peripheral cutting edges 6 are also formed to be equal to each other.

Further, the outer peripheral flank faces 5 of the outer peripheral cutting edges 6 are formed in such a way that concave and convex are formed in the radial direction (inner and outer circumferential direction of the end mill main body 1) in the part from the location slightly apart from the tip end of the end mill main body 1 to the rear end side of the cutting edge part 3. Therefore, in this portion, the outer peripheral cutting edges 6 are also formed in the waveform concaved and convexed in the radial direction with respect to the axis O of the end mill main body 1 as viewed from the end mill rotation direction T as shown in FIG. 4; and this portion is defined as the waveform cutting edge 9 in the present embodiment.

In the present embodiment, the waveform of these waveform cutting edges 9 is formed in the shape in which the convexed arc, which is convexed toward the outer circumferential side of the end mill main body 1; and the concaved arc, which is concaved toward the inner circumferential side of the end mill main body 1, are alternatively connected continuously with a constant pitch (pitch P) as viewed from the end mill rotation direction as shown in FIG 4. In each of the four outer peripheral cutting edges 6, the shape and the size of the waveform formed by each waveform cutting edge 9, which are the period and the amplitude thereof, is set equally. However, the phase of the waveform is shifted in the direction of the axis O between the outer peripheral cutting edges 6 adjacent in the circumferential direction.

Between the tip end of the end mill main body 1 and the above-mentioned position slightly spaced therefrom, the portion, in which the outer peripheral flank face 5 is not concaved and convexed as described above, is provided. In the tip end part of the outer peripheral cutting edge 6 in this part, the tip cutting edge 10, which connects to the peak toward the outer circumferential side in the waveform in the most distal end of the end mill main body 1 among the waveform cutting edges 9 of each outer peripheral cutting edge 6 (the location where the waveform cutting edge 9 starts concaving at first to the inner circumferential side toward the rear end side of the end mill main body 1); and the rotation locus about the axis O thereof are located on the identical cylindrical surface centered on the axis O, is provided to be crossed with the end cutting edge 8. Therefore, the length of the tip cutting edges 10 of the respective outer peripheral cutting edges 6 is different depending on the phase shift of the waveform cutting edge 9.

In addition, the above-described waveform cutting edges 9 of the outer peripheral cutting edges 6 have one or more parts, in which phases of the waveform cutting edges 9 are sequentially shifted multiple times toward a rear end side of the end mill main body 1, and then shifted the same multiple times toward a tip end side of the end mill main body 1, while a reference outer peripheral cutting edge 6A goes around once on a side opposite to the end mill rotation direction T and returns to a position of the reference outer peripheral cutting edge 6A as shown in FIG. 4 by the arrows.

In this embodiment, the outer peripheral cutting edge 6 is defined as the reference first outer peripheral cutting edge 6A when the peak of the waveform is connected to the tip cutting edge 10 located on the most distal side of the end mill main body 1 with respect to each waveform cutting edge 9 as shown in FIG. 4, the phase of the waveform cutting edge 9 of the subsequent second outer peripheral cutting edge 6B, which is adjacent to the reference first outer peripheral cutting edge 6A in the side opposite to the end mill rotation direction T, is shifted one step toward the rear end side of the end mill main body 1. Then, the phase of the waveform cutting edge 9 of the further subsequent third outer peripheral cutting edge 6C, which is adjacent to the second outer peripheral cutting edge 6B in the side opposite to the end mill rotation direction T, is further shifted one more step toward the rear end side of the end mill main body 1.

Next, the phase of the waveform cutting edge 9 of the fourth outer peripheral cutting edge 6D, which is adjacent to the third outer peripheral cutting edge 6C in the side opposite to the end mill rotation direction T, is further shifted one step toward the tip end side of the end mill main body 1 in reverse. Then, the phase of the waveform cutting edge 9 of the first reference outer peripheral cutting edge 6A, which is adjacent to the fourth inner peripheral cutting edge 6D in the side opposite to the end mill rotation direction T, is further shifted one more step toward the tip end side of the end mill main body 1. The amounts of the phase shift Q of the waveform cutting edges 9 of the first to the fourth outer peripheral cutting edges 6A to 6D, each of which is adjacent to one of them in the side opposite to the end mill rotation direction T, are the same. Therefore, the amount of the phase shift Q is set to 1/3 of the pitch P in one waveform cutting edge 9 in the present embodiment; and the phases of the waveform cutting edges 9 of the second and the fourth outer peripheral cutting edges 6B and 6D match.

In the normal roughing end mill in which the phases of the waveform cutting edges 9 are sequentially shifted to the rear end side or the tip side of the end mill main body 1 on the outer peripheral cutting edges adjacent to the side opposite to the end mill rotation direction, for example, when the waveform cutting edges 9 are sequentially shifted to the rear end side as shown in FIG. 4B, the impacts in cutting by the waveform cutting edges 9, are lorded only in one direction toward the rear end side as shown in the arrows, similarly. Therefore, these impacts are loaded only in the one direction of the axis O of the end mill main body in the sequential order even in the periodical way. Accordingly, the resonance of the end mill main body 1 becomes likely to occur due to these impacts as described above; and the occurrence of the chatter vibration is triggered.

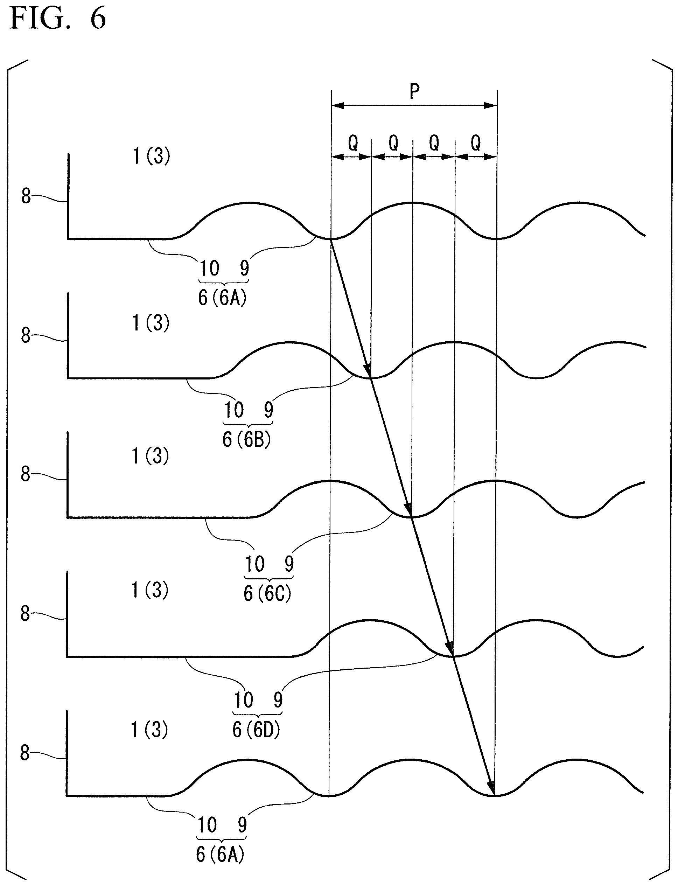

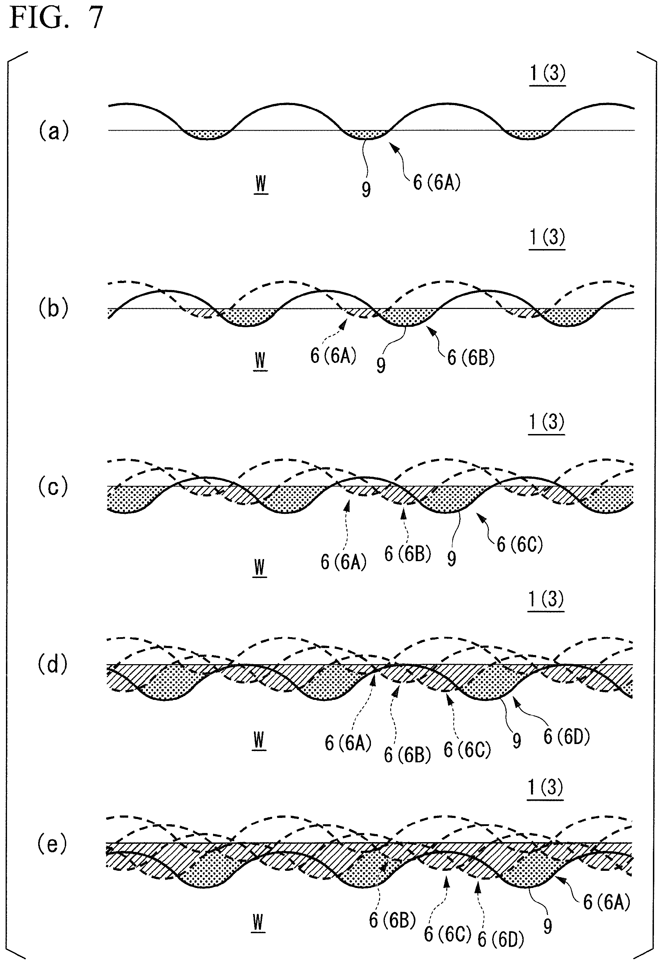

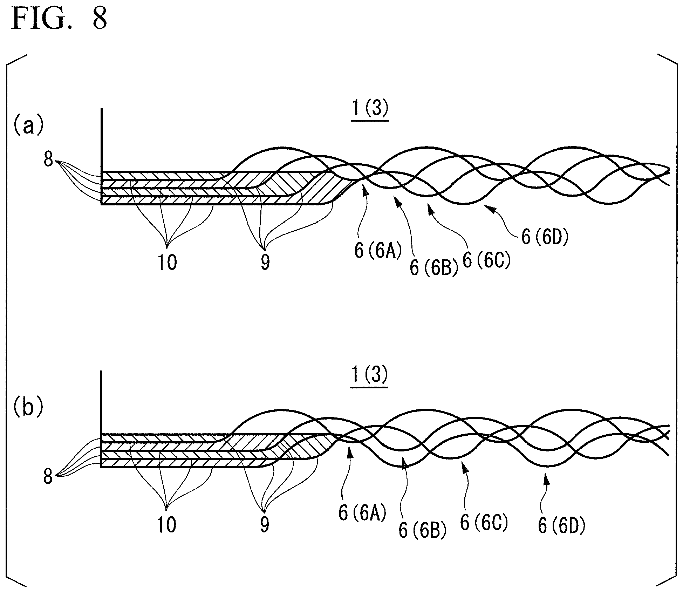

FIG. 6; and the after-mentioned FIG. 7 and FIG 8(a) show Comparative Examples to embodiments of the present invention. In Comparative Examples shown these figures, the shape and the dimension of each outer peripheral cutting edge 6 are set in the same ways as in the embodiment of the present invention; and the same reference sings as in the embodiment of the present invention are placed to the common parts for explanation. Even with the same 4 edges, in the normal roughing end mill, the amount of the phase shift Q of the waveform cutting edges 9 of the first to the fourth outer peripheral cutting edges 6A to 6D, each of which is adjacent to one of them in the side opposite to the end mill rotation direction T, becomes 1/4 of the pitch P of the one waveform cutting edge 9 as shown in FIG. 6.

Contrary to that, in the roughing end mill of the present embodiment, along with the rotation of the end mill main body 1, the impacts are loaded toward the rear end side of the end mill main body 1 in two cuttings when the waveform cutting edges 9 of the second and the third outer peripheral cutting edges 6B, 6C, which are continuous from the reference first outer peripheral cutting edge 6A in the side opposite to the end mill rotation direction T, are cut into the workpiece as in cutting in Comparative Example. On the other hand, the impacts in two cuttings when the waveform cutting edges 9 of the fourth outer peripheral cutting edge 6D and the original reference first outer peripheral cutting edge 6A, which are continuous from the third outer peripheral cutting edge 6C in the side opposite to the end mill rotation direction T, are cut into the workpiece subsequently, are loaded toward the tip end side of the end mill main body in reverse to Comparative Example as shown in FIG 4 by the arrows.

Therefore, since the impacts are loaded: twice toward the rear end side of the end mill main body 1; and in the same time of 2 toward the tip end side of the end mill main body 1 when the waveform cutting edges 9 of the outer peripheral cutting edges 6 are cut into the workpiece while the end mill main body 1 is rotated in one round, the occurrence of: the resonance of the end mill main body due to these impacts; and the chatter vibration can be prevented by cancelling out these impacts each other. Because of this, according to the roughing end mill in the above-described configuration, deterioration of the surface processing accuracy due to the chatter vibration; reduction of the machining efficiency by being unable to increase the feed in cutting; and breaking due to the end mill main body 1 being hit to the machined surface, can be prevented.

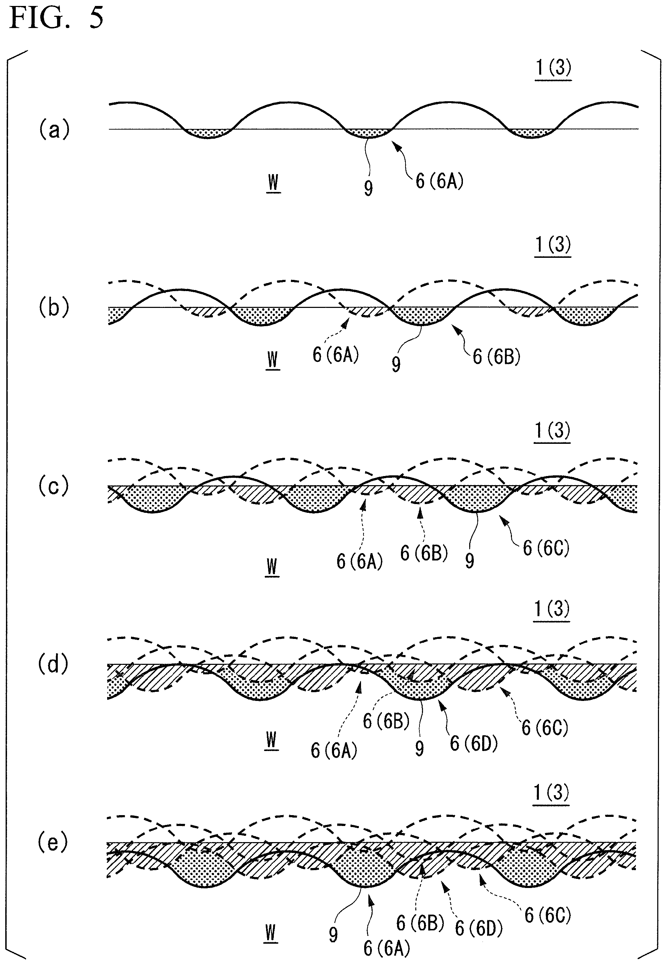

FIGS. 5 and 7 show the cross sections in order along the feed direction F of the chips formed by the waveform cutting edges 9 when each of the outer peripheral cutting edges 6 of the roughing end mills of the present embodiment and the normal roughing end mill of Comparative Example shown in FIG. 6 are cut into the workpiece W, respectively. The dotted parts and the hatched parts correspond to the chips by the waveform cutting edge 9 of the outer peripheral cutting edge 6 cut into the workpiece W and the chips by the waveform cutting edge 9 of the outer peripheral cutting edge 6 in previous cutting, respectively.

Among them, in Comparative Example shown in FIG. 7, the cross sections of the chips are sequentially increased in the shape of fans as shown in FIGS. 7 (a) to 7(d) as the outer peripheral cutting edges 6 being cut into the workpiece W. Once the cutting reaches to the point where the waveform cutting edge 9 cuts into the machined surface of the waveform cutting edge 9 previously cut into, the cross section reaches to the maximum as shown in FIG. 7 (e). After that, the chips having the same shape and the same cross section are formed continuously. Therefore, the extents of the impacts loaded on each of the waveform cutting edges 9 after that are the same.

Contrary to that, the cross sectional area of the chips formed in the roughing end mill of the present embodiment increase sequentially in the shape of fans substantially the same as Comparative Example as shown in FIGS. 5 (a) to 5(c) until the waveform cutting edges 9 of the first to the third outer peripheral cutting edges 6A to 6C are cut into the workpiece W. However, the waveform cutting edge 9 of the fourth outer peripheral cutting edge 6D, which is subsequent to the third outer peripheral cutting edge 6C, cut the machined surface having been cut by the second outer peripheral cutting edge 6B. Thus, the chips formed in this step are in the thin arc shape; and the cross sectional area is reduced as shown in FIG. 5 (d).

Moreover, the chips formed by the waveform cutting edge 9 of the first outer peripheral cutting edge 6A, which is subsequent to the fourth outer peripheral cutting edge 6D, after the end mill main body 1 rotated in one round are formed in the fan shape thicker than the chips formed by the waveform cutting edge 9 of the fourth outer peripheral cutting edge 6D and with a larger cross sectional area as shown in FIG. 5 (e). Then, after that, these thick fan shaped chips with the large cross sectional area are formed and large impacts are loaded by the waveform cutting edges 9 of the first and the third outer peripheral cutting edges 6A, 6C; the thin fan arc shaped chips with the small cross sectional area are formed and small impacts are loaded by the waveform cutting edges 9 of the second and the fourth outer peripheral cutting edges 6B, 6D; and these two cutting modes are repeated alternately.

Therefore, in the roughing end mill having the above-described cutting modes, in addition to the change of the direction of the impacts when the waveform cutting edges 9 of the outer peripheral cutting edges 6 are cut into the workpiece during the end mill main body 1 being rotated in one round as described above, the extents of the impacts differ in the waveform cutting edges 9 of the outer peripheral cutting edges 6 adjacent to the side opposite to the end mill rotation direction T. Because of this, the occurrence of the chatter vibration to the end mill main body 1 by vibration resonance due to these impacts can be prevented more reliably; the processing accuracy and processing efficiency can be further improved; and a roughing end mill having a long service life can be provided.

In addition, the tip cutting edge 10, which is connected to the peak of the waveform cutting edge 9 in the most distal end of the end mill main body, is provided to the tip end part of the outer peripheral cutting edge 6 in the present embodiment. The rotation locus of the tip cutting edges 10 about the axis O of tip cutting edges 10 are located on the identical cylindrical surface centered on the axis O. Since the tip cutting edge 10 crosses to the end cutting edge 8, the cross angle between the end cutting edge 8 and the outer peripheral cutting edge 6 becomes a substantially right angle. Because of this, the tendency that breaking occurs easily due to the cross angle being an acute angle can be prevented, for example, in the case where the outer peripheral cutting edge 6 and the end cutting edge 8 cross at the portion concaved in the inner peripheral side as the waveform cutting edges 9 extending toward the rear end side of the end mill main body 1.

When such the tip cutting edge 10 is formed at the tip end part of the outer peripheral cutting edge 6 to be connected to the peak of the most distal convex portion of the waveform cutting edge 9, for example, in the normal roughing end mill of the Comparative Example shown in FIG. 6, the cutting edge lengths of the tip cutting edges 10 are elongated from the outer peripheral cutting edge 6, the most distal convex portion of which is located in the most distal end side of the end mill main body 1, toward the outer peripheral cutting edge 6 on the side opposite to the end mill rotation direction as shown in FIG. 6. Then, along with this, the removal allowance by the tip cutting edges 10 of the outer peripheral cutting edges 6 and the vicinity of the peak of the mostly distal convex portion of the waveform cutting edges 9 connected to the tip cutting edges 10 on the workpiece W is minimum in the outer peripheral cutting edge 6, in which the mostly distal convex portion is located in the most distal end side of the end mill main body 1 as shown in FIG. 8 (a) by hatching. Then, it is sequentially increased toward the outer peripheral cutting edge 6 on the side opposite to the end mill rotation direction. Then, the removal allowance by the vicinity of the peak of the convex portion of the outer peripheral cutting edge 6, in which the mostly distal convex portion of the waveform cutting edge 9 is located in the mostly posterior end side of the end mill main body 1 as shown at the bottom in FIG 8 (a), and the tip cutting edge 10 becomes maximum. Accordingly, the cutting load is increased in this lastly-mentioned outer peripheral cutting edge 6; and there is a possibility that fracture occurs.

Even in the normal roughing end mill in which the phases of the waveform cutting edges 9 are sequentially shifted toward the tip end side of the end mill main body 1 in the peripheral cutting edges 6 adjacent on the side opposite to the end mill rotation direction in reverse to the above-described Comparative Example, the removal allowance is increased and fracture would be triggered similarly, since when: the outer peripheral cutting edge 6, in which the most distal convex portion of the waveform cutting edge 9 is located in the most distal side of the end mill main body 1 and has the shortest tip cutting edge 10, cuts the workpiece; and then the outer peripheral cutting edge 6, which is adjacent to the outer peripheral cutting edge 6 on the side opposite to the end mill rotation direction and has the longest tip cutting edge 10, cuts the workpiece, this outer peripheral cutting edge 6 with the longest tip cutting edge 10 scrapes away the parts left uncut by the previous outer peripheral cutting edge 6 with the short tip cutting edges 10 together. Moreover, the removal allowances change from the minimum to the maximum suddenly in cutting of the workpiece by the outer peripheral cutting edge 6 with the longest tip cutting edge 10 after cutting by the outer peripheral cutting edge with the shortest tip cutting edge 10. In addition, the removal allowances change from the maximum to the minimum suddenly in cutting of the workpiece by the outer peripheral cutting edge 6 with the shortest tip cutting edge 10 after cutting by the outer peripheral cutting edge with the longest tip cutting edge 10 as shown at the bottom in FIG. 8 (a). In either case, the cutting load from the tip cutting edges 10 to the tip end part of the end mill main body 1 suddenly changes. Thus, there is a possibility that the sudden change causes the occurrence of the vibration.

Contrary to that, in the roughing end mill of the above-described embodiment of the present invention, even in the case where the tip cutting edges 10 are provided at the tip end part of the outer peripheral cutting edges 6 to be connected to the peak of the most distal convex portion of the waveform cutting edges 9, the cutting edge length of the tip cutting edge 10 is sequentially lengthened in multiple times (twice) in the second and the third outer peripheral cutting edges 6B, 6C in the order from the reference first outer peripheral cutting edge 6A toward the side opposite to the end mill rotation direction T as shown in FIG. 4; and sequentially shortened in the same times (twice) from the third outer peripheral cutting edge 6C to the fourth outer peripheral cutting edge 6D and to return to the level in the reference first outer peripheral cutting edge 6A for the end mill main body 1 to be rotated in one round. Because of this, the removal allowance of the outer peripheral cutting edges 6 having the tip cutting edge with the longest cutting edge does not become too large. Accordingly, the occurrence of fracture in the outer peripheral cutting edges 6 can be prevented.

Further, along with this, the removal allowance on the workpiece W by the tip cutting edges 10 of the outer peripheral cutting edges 6 and the vicinity of the peak of the most distal convex portion of the waveform cutting edges 9 connected to the tip cutting edges 10 sequentially increases and then sequentially decreases as shown in FIG. 8 (b) by hatchings, while the reference outer peripheral cutting edge 6A goes around once on the side opposite to the end mill rotation direction T and returns to the original position of the reference outer peripheral cutting edge 6A. Such two cutting modes are repeated alternately by the rotation of the end mill main body 1. Because of this, the sudden change of the cutting load on the tip end part of the end mill main body 1 due to the large change of the removal allowance by the tip cutting edge 10 as in the above-described normal roughing end mill, can be prevented; and the occurrence of the chatter vibration can be prevented even more reliably.

In the above-described embodiment, the number of the peripheral cutting edges 6 is the minimum of four. Thus, it is configured that the phase of the waveform cutting edge 9 shifts twice toward the rear end side of the end mill main body 1, and then, shifts twice toward the tip end side of the end mill main body 1, while the reference outer peripheral cutting edge 6A goes around once on the side opposite to the end mill rotation direction T and returns to the original position of the reference outer peripheral cutting edge 6A.

Moreover, in the case where the number of the outer peripheral cutting edges 6 is increased, it may be set to 6, for example. In that case, the number of shifts toward the rear and tip ends of the end mill main body 1 may be set to a multi-number higher than 2, such as 3 times toward the rear end of the end mill main body 1, and then, 3 times toward the tip end side, while the reference outer peripheral cutting edge 6A goes around once on the side opposite to the end mill rotation direction T and returns to the original position of the reference outer peripheral cutting edge 6A. The amount of the phase shift Q of the waveform cutting edges 9 of the adjacent outer peripheral cutting edges 6 is set to the value obtained by dividing the one pitch P of the waveform cutting edge 9 by the number of shift plus 1. Thus, the maximum amount of the phase shift Q is P/3, where the number of shift is 2.

Moreover, in the present invention, it is configured that the waveform cutting edges of the outer peripheral cutting edges have one or more parts, in which phases of the waveform cutting edges are sequentially shifted multiple times toward a rear end side of the end mill main body, and then shifted the same multiple times toward a tip end side of the end mill main body, while a reference outer peripheral cutting edge goes around once on a side opposite to the end mill rotation direction and returns to a position of the reference outer peripheral cutting edge. However, it is the same if it is configured that the waveform cutting edges of the outer peripheral cutting edges have one or more parts, in which phases of the waveform cutting edges are sequentially shifted multiple times toward a tip end side of the end mill main body, and then shifted the same multiple times toward a rear end side of the end mill main body. Contrary to that, in the case where the phases of the waveform cutting edges are shifted once toward the rear tip side of the end mill main body to the side opposite to the end mill rotation direction, and then shifted once toward the tip end, the phases of the waveform are shifted alternately in every step, rather making it easier for the vibration to occur. As a result, the technical effect of the present invention cannot be obtained in this case.

Furthermore, the case, in which the present invention is applied to the solid roughing end mill with the outer peripheral cutting edges 6 being directly formed on the cutting edge part 3 on the tip end part of the end mill main body 1, is explained in the present embodiment. However, the present invention can be applied to the brazing type roughing end mill and the cutting-edge exchangeable roughing end mill, in which the mountable cutting inserts with a nick formed on the cutting edge are attached to the end mill main body, for example. Moreover, the present invention can be applied to the ball end mill and the radius end mill instead of the square type roughing end mill as in the present embodiment.

### Industrial Applicability

Accuracy and efficiency in cutting machining using a roughing end mill are improved.

### Reference Signs List

1: End mill main body
2: Shank part
3: Cutting edge part
4: Chip discharging flute
5: Outer peripheral flank face
6: Peripheral cutting edge
6A: Reference peripheral cutting edge (first peripheral cutting edge)
6B-6D: second to fourth peripheral cutting edges
7: Gash
8: End cutting edge
9: Waveform cutting edge
10: Tip cutting edge
O: Axis of the end mill main body
T: End mill rotation direction
P: Pitch of the waveform cutting edge 9
Q: Amount of the phase shift of the waveform edge 9 of the outer peripheral cutting edge 6 adjacent in the opposite direction of the end mill rotation direction T

## Claims

1. A roughing end mill comprising:
an end mill main body configured to be rotated about an axis; and
four or more of outer peripheral cutting edges provided on an outer circumference of a tip part of the end mill main body spaced apart in a circumferential direction with an interval, each of the outer peripheral cutting edges extending from a tip of the end mill main body to a rear side thereof, wherein
each of outer peripheral cutting edges comprises a waveform cutting edge that is concaved and convexed in a radial direction of the end mill main body as viewed from an end mill rotation direction, and
a phase of the waveform cutting edge is shifted within one pitch of the waveform cutting edge between waveform cutting edges of outer peripheral cutting edges adjacent in the circumference direction, and wherein
the waveform cutting edges of the outer peripheral cutting edges have one or more parts, in which phases of the waveform cutting edges are sequentially shifted multiple times toward a rear end side of the end mill main body, and then shifted the same multiple times toward a tip end side of the end mill main body, while a reference outer peripheral cutting edge goes around once on a side opposite to the end mill rotation direction and returns to a position of the reference outer peripheral cutting edge.

2. The roughing end mill according to Claim 1, wherein
a tip cutting edge, which connects to a peak of the waveform cutting edge disposed in a most distal end of the end mill main body, is provided on a tip end part of each of the outer peripheral cutting edges, a rotation locus about the axis of tip cutting edges being positioned on an identical cylindrical surface centered on the axis.
